# EUROPÄISCHE PATENTSCHRIFT

(11) **EP 1 938 035 B1**
(45) Veröffentlichungstag und Bekanntmachung des Hinweises auf die Patenterteilung: **22.02.2012**
(21) Anmeldenummer: 06818249.2
(22) Anmeldetag: 04.10.2006
(51) Int. Cl.: F28D 1/053, F28F 21/08

(54) **WÄRMEÜBERTRAGER, INSBESONDERE FÜR KRAFTFAHRZEUGE**
HEAT EXCHANGER, IN PARTICULAR FOR MOTOR VEHICLES
ECHANGEUR THERMIQUE CONÇU EN PARTICULIER POUR DES VEHICULES AUTOMOBILES

(30) Priorität: 12.10.2005 DE 102005049310
(43) Veröffentlichungstag der Anmeldung: 02.07.2008
(73) Patentinhaber: Behr GmbH & Co. KG, 70469 Stuttgart (DE)
(72) Erfinder: GESKES, Peter, 73760 Ostfildern (DE)
(74) Vertreter: Grauel, Andreas
(86) Internationale Anmeldenummer: PCT/EP2006/009593
(87) Internationale Veröffentlichungsnummer: WO 2007/042187

(56) Entgegenhaltungen:
- EP-A- 1 429 101
- EP-A1- 0 672 472
- EP-A2- 0 092 033
- WO-A2-03/093751
- DE-U1- 29 605 634
- US-A1- 2001 027 857

## Beschreibung

Die Erfindung betrifft einen Wärmeübertrager, insbesondere für Kraftfahrzeuge,nach dem Oberbegriff des Patentanspruches 1.

WO-A2-03/093751 beschreibt einen derartigen Wärmeübertrager.

Die Abgasrückführung (Abkürzung: AGR) wird aufgrund gesetzlicher Bestimmungen zur Absenkung der Emissionen bei Kraftfahrzeugen eingesetzt. Dabei wird dem Abgasstrom ein Teilstrom entnommen, gegebenenfalls gekühlt und dem Ansaugtrakt der Brennkraftmaschine wieder zugeführt. Die Rückführrate wird dabei durch ein AGR-Ventil geregelt, welches sich in der AGR-Leitung befindet. Im Abgasstrom der Brennkraftmaschine ist eine Abgasturbine angeordnet, welche einen in der Ansaugleitung angeordneten Verdichter antreibt. Die Entnahme des Abgasstromes kann vor der Abgasturbine, d. h. auf der Hochdruckseite oder hinter der Abgasturbine, d. h. auf der Niederdruckseite erfolgen.

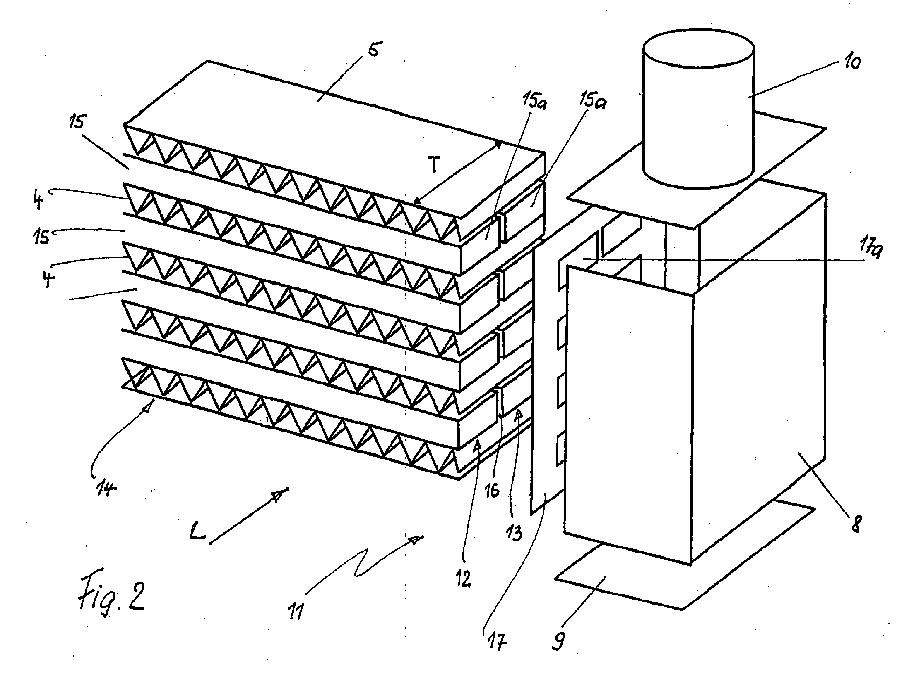

Durch die DE 103 51 546 A1 der Anmelderin wurde ein AGR-System bekannt, bei welchem der AGR-Strom auf der Hochdruckseite, also stromaufwärts der Abgasturbine entnommen, ein- oder zweistufig abgekühlt und anschließend dem Ansaugbereich der Brennkraftmaschine zugeführt wird. Bei der Kühlung des Abgases in einem Abgaskühler, der in der Regel aus korrosionsbeständigem Material wie z. B. Edelstahl hergestellt ist, fällt ein saures Kondensat aus, welches bei nicht korrosionsbeständigen Werkstoffen Korrosionsschäden hervorrufen kann. Dies kann dann beispielsweise auftreten, wenn das gekühlte Abgas, vermischt mit dem saurem Kondensat, anschließend in einen Aluminiumwärmeübertrager, z. B. einen Ladeluftkühler eintritt, was beispielsweise beim Ausführungsbeispiel gemäß Fig. 2 der Fall ist. Da Ladeluftkühler in der Regel als Aluminiumwärmeübertrager ausgebildet sind, sind sie gegen derartige Korrosionsangriffe empfindlich.

Durch die WO 00/77353 A2 wurde ein AGR-System bekannt, bei welchem der AGR-Strom stromabwärts der Abgasturbine, also auf der Niederdruckseite entnommen, in einem Abgaskühler gekühlt und dem Frischluftstrom beigemischt wird. Das Gemisch aus Frischluft und gekühltem Abgas wird zunächst vorgekühlt, dann in einem Verdichter auf Ladedruck gebracht, in einem Ladeluftkühler abgekühlt und dann der Brennkraftmaschine zugeführt. Auch hier tritt das erwähnte Korrosionsproblem in den beiden Zwischenkühlern auf, da diese ebenfalls von dem bei der Abgaskühlung ausgefallenen Kondensat beaufschlagt werden.

Neben dieser Anwendung ist bekannt, dass reines Abgas direkt durch einen luftgekühlten Kühler geleitet werden kann und auch hier saures Kondensat anfällt.

Ladeluftkühler in Aluminiumbauweise sind meistens einreihig ausgebildet und weisen von der Ladeluft durchströmbare Rohre mit einem flachen Rechteckquerschnitt auf. In den Rohren sind zur Erhöhung der Turbulenz und des Wärmeüberganges auf der Rohrinnenseite so genannte Turbulenzeinlagen oder Stegrippen angeordnet und mit der Innenwand der Flachrohre verlötet. Dadurch ergibt sich neben der Verbesserung des Wärmeüberganges eine erhöhte Innendruckfestigkeit für das flache Rohr, da die Stegrippen als Zuganker wirken. Bei einem Korrosionsangriff sind insbesondere diese Zuganker verstärkt dem Korrosionssangriff ausgesetzt und verlieren daher im Laufe der Zeit ihre Festigkeit, so dass die Rohre unter dem Druck der verdichteten Ladeluft undicht werden oder bersten können.

Es ist Aufgabe der vorliegenden Erfindung, einen Wärmeübertrager der eingangs genannten Art in seiner Korrosionsbeständigkeit zu verbessern.

Diese Aufgabe wird durch die Merkmale des Patentanspruches 1 gelöst. Erfindungsgemäß ist vorgesehen, dass der Gesamtquerschnitt eines Flachrohres in mindestens zwei Teilquerschnitte aufgeteilt wird, so dass sich mehrere Einzelrohre mit etwa dem gleichen Gesamtquerschnitt ergeben. Damit wird der Vorteil einer höheren Innendruckfestigkeit für die Rohre des Wärmeübertragers erzielt. Die insbesondere für einen Ladedruck bei Ladeluftkühlern erforderliche Innendruckfestigkeit wird nahezu allein durch den erfindungsgemäßen Querschnitt der Einzelrohre aufgebracht, die somit quasi selbst tragend sind und prinzipiell - aus Festigkeitsgründen - keine Einlagen mit Zugankerwirkung mehr benötigen. Gleichwohl können auch derartige Turbulenzeinlagen zur Erhöhung des Wärmeüberganges auf der Ladeluftseite vorgesehen werden. Je mehr Rohre in der Tiefe des Kühlers angeordnet sind, umso mehr selbst tragend sind die Rohre von sich aus.

Der Gesamtquerschnitt der Rohre ist rechteckförmig, ausgebildet, wobei die Telquerschnitte im Wesentlichen rechteckförmig ausgebildet sind.

In einer weiteren Ausführung sind die Rohre stoffschlüssig verbindbar, insbesondere lötbar, schweißbar, klebbar.

In weiterer vorteilhafter Ausgestaltung der Erfindung können - wie bereits erwähnt - innerhalb der Einzelrohrquerschnitte Turbulenzerzeuger in Form von Stegrippen oder dergleichen angeordnet sein, die mit den Innenwandungen der Einzelrohre verlötbar sind. Diese Turbulenzeinlagen werden in erster Linie zur Verbesserung der Wärmeübertragung auf der Rohrinnenseite und nur sekundär zur Erhöhung der Innendruckfestigkeit verwendet. Daher kann in weiterer Ausgestaltung der Erfindung auf derartige Turbulenzeinlagen gänzlich verzichtet und stattdessen eine Ausformung von Turbulenz erzeugenden Strukturelementen aus den Rohrwandungen vorgesehen werden. Beispielsweise können derartige Strukturelemente in Form von winglets - wie aus dem Stand der Technik bekannt - ausgebildet sein, d. h. etwa pfeilförmig angeordnete Elemente, welche in der Strömung einen Wirbelzopf erzeugen. Möglich sind auch aus der Rohrwandung ausgeprägte Noppen, welche in die Gas- bzw. Ladeluftströmung hineinragen.

In weiterer vorteilhafter Ausgestaltung der Erfindung weisen die Rechteckquerschnitte der Einzelrohre hinsichtlich der Rohrhöhe und Rohrbreite bevorzugte Abmessungen auf: die Rohrhöhe h liegt in einem Bereich von 4 bis 15 mm, vorzugsweise bei etwa 10 mm. Ausgehend von diesem Bereich für die Rohrhöhe h ist erfindungsgemäß ein Verhältnis von einer Rohrbreite zur Rohrhöhe im Bereich von 2 bis 7, insbesondere 3 bis 7 und bevorzugt im Bereich von 4 bis 6 vorgesehen. Damit wird der Vorteil eines innendruckfesten Querschnittes erreicht, welcher den auftretenden Drücken, insbesondere resultierend aus dem Ladedruck des AGR-Systems, ohne Verformung standhält. Damit sind grundsätzlich keine Turbulenzeinlagen mit Zuganker notwendig, welche besonders korrosionsanfällig sind. Somit wird diese Schwachstelle im Stand der Technik durch eine angepasste Querschnittsgestaltung der Rohre beseitigt. Statt der Turbulenzeinlagen können daher aus der Rohrwandung ausgeformte Strukturelemente verwendet werden, wodurch der Druckabfall in den Rohren reduziert wird.

In weiterer vorteilhafter Ausgestaltung der Erfindung ist der erfindungsgemä-βe Wärmeübertrager besonders vorteilhaft als Ladeluftkühler oder Abgaskühler in einem AGR-System verwendbar, wobei die Rohre des Ladeluftkühlers oder Abgaskühlers von Ladeluft, Abgas oder einem Gemisch aus Ladeluft und gekühltem, rückgeführten Abgas durchströmt werden. Dies tritt insbesondere bei einer Niederdruckentnahme des rückgeführten Abgases auf, kann jedoch auch bei einer Hochdruckentnahme der Fall sein, wie der eingangs erwähnte Stand der Technik zeigt.

In einer weiteren vorteilhaften Ausgestaltung der Erfindung wird der Wärmeübertrager als Ladeluftkühler in einem AGR-System einer Brennkraftmaschine eines Kraftfahrzeuges verwendet.

In einer weiteren vorteilhaften Ausgestaltung der Erfindung wird der Wärmeübertrager als Abgaskühler in einem AGR-System einer Brennkraftmaschine eines Kraftfahrzeuges verwendet.

In einer weiteren vorteilhaften Ausgestaltung der Erfindung wird der Wärmeübertrager als Kühler zur Abkühlung eines Abgas-Ladeluftgemisches in einem AGR-System einer Brennkraftmaschine eines Kraftfahrzeuges verwendet.
- Fig. 1: einen teilweise dargestellten Ladeluftkühler nach dem Stand der Technik,
- Fig. 2: einen erfindungsgemäßen Ladeluftkühler,
- Fig. 3: einen Ausschnitt eines erfindungsgemäßen dreireihigen Ladeluftkühlers,
- Fig. 3a: ein erfndungsgemäßes Rohr mit drei Einzelrohren für einen Ladeluftkühler,
- Fig. 3b: ein abgewandeltes Rohr,
- Fig. 4: ein Rohr mit eingeprägten Strukturelementen und
- Fig. 4a: eine perspektivische Darstellung des Rohres gemäß Fig. 4.

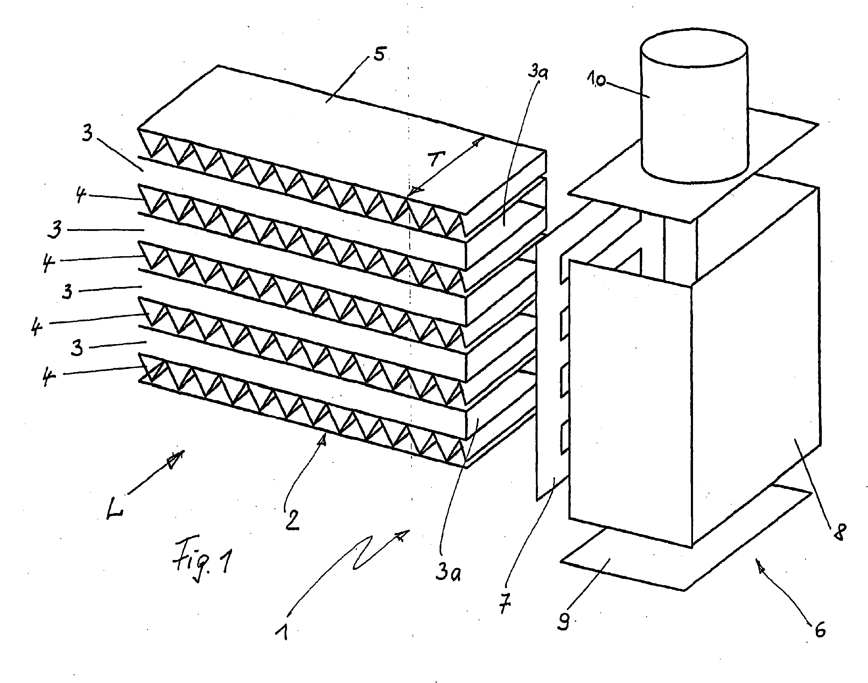

**Fig. 1** zeigt schematisch und in Explosivdarstellung einen Ladeluftkühler 1 nach dem Stand der Technik. Derartige bekannte Ladeluftkühler werden für die Aufladung von Verbrennungsluft für Verbrennungsmotoren von Kraftfahrzeugen eingesetzt, sie befinden sich stromabwärts eines von einer Abgasturbine angetriebenen Verdichters in der Ansaugleitung und kühlen die verdichtete Ladeluft ab, um den Liefergrad für den Verbrennungsmotor zu erhöhen. In Kraftfahrzeugen werden vorrangig Ladeluftkühler in Aluminiumbauweise verwendet, d. h. sämtliche Teile des Ladeluftkühlers bestehen aus Aluminium oder Aluminiumlegierungen und sind somit mit einander verlöt- oder verschweißbar. Der bekannte Ladeluftkühler 1 besteht aus einem Block 2, welcher aus Flachrohren 3 und Wellrippen 4 sowie seitlich angeordneten Seitenteilen 5 aufgebaut ist. Die Rohre 3 kommunizieren mit einem Sammelkasten 6, welcher einen Rohrboden 7, einen Kasten 8, einen Deckel 9 und einen Ein- bzw. Auslassstutzen 10 für die Ladeluft aufweist. Sämtliche Teile werden - wie erwähnt - miteinander verlötet und/oder verschweißt. Der Block 2 ist einreihig ausgebildet, weist also nur eine Reihe von Rohren 3 auf, welche einen flachen rechteckförmigen Querschnitt 3a aufweisen. In den Rohren 3 sind - was nicht dargestellt ist - so genannte Turbulenzeinlagen, z. B. in Form von so genannten Stegrippen angeordnet, welche mit den Rohren 3 verlötet sind und somit als Zuganker wirken, um ein Ausbeulen der Rohre unter der Wirkung des Innendrucks der Ladeluft zu vermeiden. Gleichzeitig bewirken die Turbulenzeinalgen eine Erhöhung des Wärmeüberganges der Ladeluft an die Rohrinnenwand. Die Außenflächen der Rohre 3, welche durch die Rippen 4 (Sekundärftächen) vergrößert sind, werden von Umgebungsluft umströmt - die Luftströmungsrichtung ist durch einen Pfeil L gekennzeichnet.

**Fig. 2** zeigt einen erfindungsgemäßen Ladeluftkühler 11, welcher ähnlich wie der bekannte Ladeluftkühler 1 gemäß Fig. 1 aufgebaut, jedoch zweireihig mit zwei in Luftströmungsrichtung L hintereinander angeordneten Rohrreihen 12, 13 ausgebildet ist. Im Übrigen werden für gleiche Teile gleiche Bezugszahlen wie in Fig. 1 verwendet. Durchgehende Rippen 4, vorzugsweise als Wellrippen ausgebildet, erstrecken sich über beide Rohrreihen 12, 13, wobei jeweils die äußerste Wellrippe 4 durch ein Seitenteil 5 abgeschlossen wird. Die beiden Rohrreihen 12, 13 bilden mit den Rippen 4 und den Seitenteilen 5 einen Block 14, welcher in Luftströmungsrichtung L eine Tiefe T aufweist, welche der Tiefe T des bekannten Ladeluftkühlers gemäß Fig. 1 ungefähr entspricht. Die beiden Rohrreihen 12, 13 weisen jeweils Rohre 15 mit einem Rechteckquerschnitt 15a auf, welcher etwa die Hälfte des Rechteckquerschnittes 3a des bekannten Ladeluftkühlers 1 gemäß Fig. 1 beträgt. Zwischen beiden Rohrreihen 12, 13 befindet sich ein Luftspalt 16. Die Rohrenden der beiden Rohrreihen 12, 13 werden von einem Boden 17 mit entsprechend angeordneten Aufnahmeöffnungen 17a aufgenommen. Beide Rohrreihen 12, 13 werden somit parallel von Ladeluft durchströmt. Die Querschnitte 15a der beiden Rohrreihen 12, 13 sind derart bemessen, dass sie dem aus dem Ladeluftdruck resultierenden Innendruck grundsätzlich ohne die Verwendung von Einlagen mit Zugankerwirkung standhalten. Die Rohrquerschnitte 15a erhalten allerdings eine gewisse Stützwirkung durch die Anordnung der Wellrippen 4, welche mit den Rohren 15 zu dem Block 14 verlötet sind. Diese erfindungsgemäße Bauweise des Ladeluftkühlers 11 kann besonders vorteilhaft in einem AGR-System eingesetzt werden, in welchem der Ladeluftkühler 11 nicht nur mit reiner Frischluft (Ladeluft), sondern auch mit Abgas, insbesondere gekühltem rückgeführtem Abgas beaufschlagt wird, welches korrosive Kondensate enthält oder enthalten kann. Dadurch, dass die Innendruckfestigkeit verstärkende Turbulenzeinlagen grundsätzlich entfallen können, ist der erfindungsgemäße Ladeluftkühler weniger korrosionsanfällig, da die Rohrwandungen weniger stark angegriffen werden als im Strömungsquerschnitt befindliche Turbulenzeinlagen. Selbst für den Fall, dass zur Erhöhung des Wärmeüberganges Turbulenzeinlagen verwendet werden, kann deren korrosionsbedingte Schwächung infolge Materialabtragung nicht zu einem Versagen oder Undicht werden der Rohre führen.

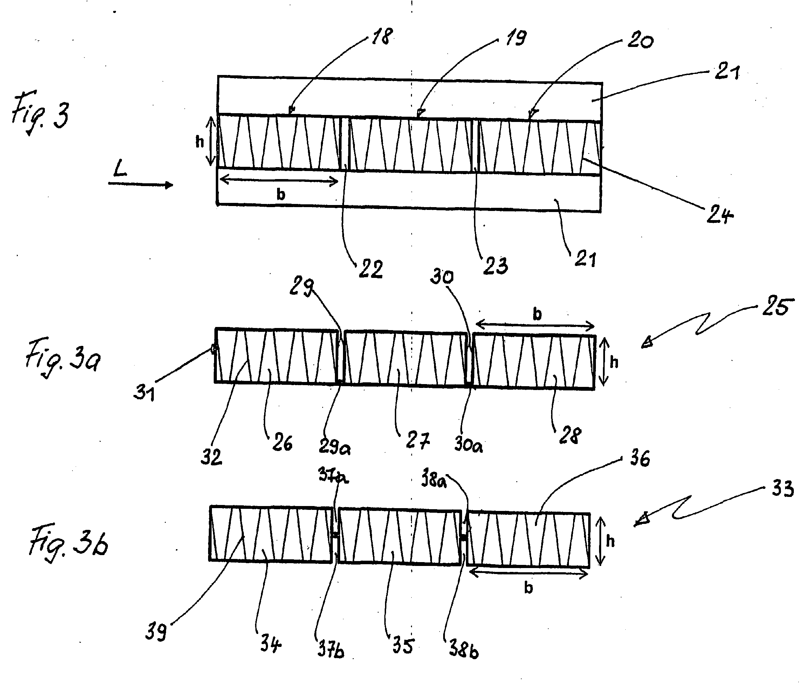

**Fig. 3** zeigt ein weiteres Ausführungsbeispiel der Erfindung mit einem Ausschnitt eines dreireihigen Ladeluftkühlers, d. h. mit drei in Luftströmungsrichtung L hintereinander angeordneten Rohren bzw. Rohrreihen 18, 19, 20. Beiderseits der Rohre 18, 19, 20 sind von Umgebungsluft überströmte Rippen (Wellrippen) 21 angeordnet. Zwischen den Rohrreihen 18, 19, 20 befinden sich Luftspalte 22, 23. Die Rohre 18, 19, 20 weisen einen Rechteckquerschnitt mit einer Rohrbreite b und einer Rohrhöhe h auf. Innerhalb der Rohrquerschnitte sind Turbulenzeinlagen 24 oder so genannte Stegrippen angeordnet - die, wie erwähnt, keine primär tragende, sondern in erster Linie die Funktion haben, den ladeluftseitigen Wärmeübergang zu verbessern.

**Fig. 3a** zeigt eine weitere Ausgestaltung der Erfindung in Form eines Rohres 25, welches drei Einzelrohre 26, 27, 28 aufweist, welche jeweils durch einen Steg bzw. einen doppelwandigen Falz 29, 30 voneinander abgeteilt sind. Das Mehrkammerrohr 25 ist durch Umformung (Faltung und Falzung) aus einem Blechband herstellbar und wird seitlich an einer Nahtstelle 31 verschweißt oder verlötet. Ebenso werden die Falze 29, 30 im Bereich ihrer Kontaktstellen 29a, 30a mit der Rohrwand verlötet, wodurch eine Zugankerwirkung, d. h. eine erhöhte Innendruckfestigkeit hergestellt wird. Die Kammern 26, 27, 38 weisen ebenfalls eine Rohrhöhe h und eine Rohrbreite b auf. In den Einzelrohren können Turbulenzeinlagen 32 angeordnet sein.

**Fig. 3b** zeigt eine weitere Ausgestaltung der Erfindung in Form eines Rohres 33 mit drei Einzelrohren 34, 35, 36, welche durch sich gegenseitig auf halber Rohrhöhe kontaktierende Stege bzw. Falze 37a, 37b, 38a, 38b abgeteilt werden. Das Mehrkammerrohr 33 kann aus einem Blechband hergestellt werden, wobei die Stege 37a, 37b, 38a, 38b im Bereich ihrer Kontaktstellen miteinander verlötet werden, um somit die gewünschte Zugankerwirkung zu erreichen. Turbulenzeinlagen 39 können ebenfalls vorgesehen werden. Die Abmessungen der Kammern sind wiederum mit der Rohrhöhe h und der Rohrbreite b bezeichnet.

Nach einer bevorzugten Ausführungsform der Erfindung sind die Abmessungen der Rohrbreite und Rohrhöhe wie folgt gewählt: die Rohrhöhe h liegt vorzugsweise im Bereich von 4 bis 15 mm, wobei das Verhältnis aus Rohrbreite b und Rohrhöhe h m Bereich von 2 bis 10, vorzugsweise im Bereich von 3 bis 7 und besonders bevorzugt im Bereich von 4 bis 6 liegt. Durch diese Abmessungen kann eine hinreichende Innendruckfestigkeit bei relativ niedrigem ladeluftseitigem Druckabfall erzielt werden.

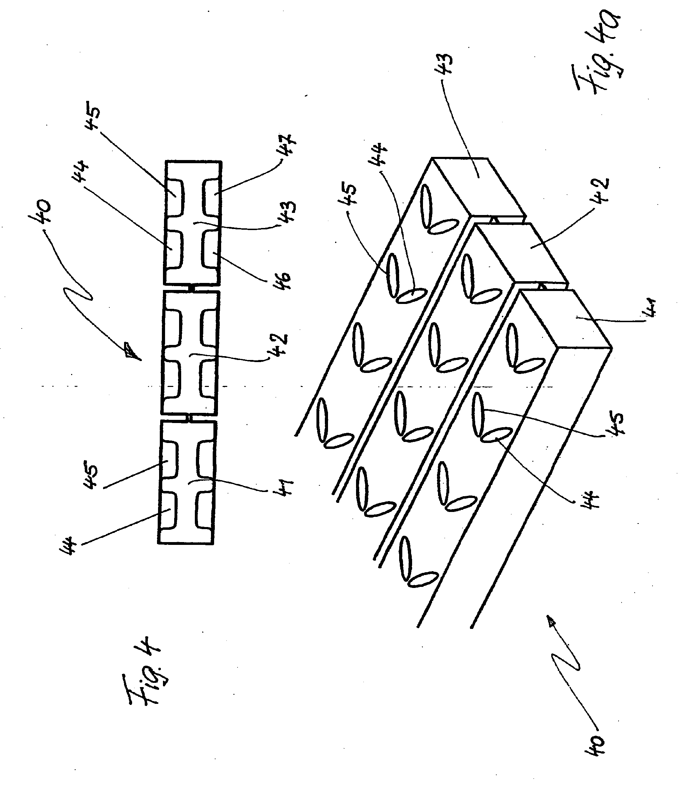

**Fig. 4** zeigt ein weiteres Ausführungsbeispiel der Erfindung in Form eines (einstückigen) Rohres 40 mit drei Einzelrohren 41, 42, 43, in dessen Rohrwandungen paarweise angeordnete, in den Kammerquerschnitt hineinragende Strukturelemente 44/45, 46/47 eingeformt sind.

**Fig. 4a** zeigt eine perspektivische Darstellung auf die Außenseite des Rohres 40: die Strukturelemente 44, 45 sind paarweise und V-förmig zueinander angeordnet und sind an sich als so genannte winglets aus dem Stand der Technik, insbesondere für Abgaswärmeübertrager der Anmelderin bekannt. Bei diesem Ausführungsbeispiel ist also gänzlich auf die Innendruckfestigkeit erhöhende Turbulenzeinlagen verzichtet, und zwar zu Gunsten der Strukturelemente 44, 45, 46, 47, welche durch Verwirbelung den ladeluftseitigen Wärmeübergang verbessern.

## Patentansprüche

1. Wärmeübertrager, insbesondere für Kraftfahrzeuge, bestehend aus jeweils einen Gesamtquerschnitt (3a) aufweisenden Rohren (3), welche von einem zu kühlende Medium durchströmbar sind, wobei der Gesamtquerschnitt (3a) in mindestens zwei Teilquerschnitte aufteilbar ist, wobei
der Gesamtquerschnitt (3a) etwa rechteckförmig ausgebildet ist, und
die mindestens zwei Teilquerschnitte (15a; 18, 19, 20; 26, 27, 28; 34 35, 36; 41, 42, 43) rechteckförmig ausgebildet, sind, **dadurch gekennzeichnet, dass**
jeder Teilquerschnitt (15a) als einzelnes Rohr (15) ausgebindet ist und der Wärmeübertrager mindestens zwei Rohrreihen (12, 13; 18, 19, 20) aufweist.

2. Wärmeübertrager nach Anspruch 1, **dadurch gekennzeichnet, dass** in jedem Teilquerschnitt (18, 19, 20; 26, 27, 28; 34, 35, 36; 41, 42, 43) Turbulenzerzeuger angeordnet sind.

3. Wärmeübertrager nach Anspruch 2, **dadurch gekennzeichnet, dass** die Turiaufenzeroeuger als Innen- oder Stegrippe (24, 32, 39) ausgebildet und mit den Rohren (18, 19, 20; 25, 33) stoffschlüssig verbunden sind.

4. Wärmeübertrager nach Anspruch 2, **dadurch gekennzeichnet, dass** die Turbuienzerzeuger als aus den Rohren (40) ausgeformte Strukturelemente (44, 45, 46, 47), insbesondere Noppen oder so genannte Winglets ausgebildet sind.

5. Wärmeübentrager nach mindestens einem der Ansprüche 1 bis 4, **dadurch gekennzeichnet, dass** die Teilquerschnitte bzw. die Einzelrohre (18, 19, 20; 26, 27, 28; 34, 35, 36; 41, 42, 43) eine Rohrhöhe h in einem Bereich von 4 bis 15 mg vorzugsweise von 8 bis 11 mm aufweisen.

6. Wärmeübertrager nach einem der Ansprüche 1 bis 5, **dadurch gekennzeichnet, dass** die Teilquerschnitie bzw. Einzelrohre (18, 19, 20; 26, 27, 28; 34, 35, 36; 41, 42, 43) eine Rohrbreite b und ein Verhältnis von Rohrbreite b zu Rohrhöhe h im Bereich von 2 bis 10, insbesondere im Bereich von 3 bis 7 und besonders bevorzugt im Bereich von 4 bis 6 aufweisen.

7. Wärmeübertrager nach einem der Ansprüche 1 bis 6, **dadurch gekennzeichnet, dass** er aus Aluminiumwerkstoffen herstellbar ist,

8. Wärmeübertrager nach einem der Ansprüche 1 bis 6, **dadurch gekennzeichnet, dass** er aus Edelstahl herstellbar ist.

## Claims

1. A heat exchanger, in particular for motor vehicles, comprising tubes (3) each having a total cress section (3a), through which a medium to be cooled can flow, wherein the total cross section (3a) can be divided intro at least two partial cross section, wherein the at least two partial cross section (15a; 18, 19, 20; 26, 27, 28; 34 35, 36; 41, 42, 43) are rectangular,
**characterized in that** each partial cross section (15a) is in the form of a single tube (15), and the heat exchanger comprise at least two tube rows (12, 13; 18, 19, 20).

2. The heat exchanger according to claim 1, **characterized in that** turbulence generators are disposed in each partial cross section (18, 19, 20; 26, 27, 28; 34, 35, 36; 41, 42, 43).

3. The heat exchanger according to claim 2, **characterized in that** the turbulence generators are in the form of inner or bar ribs (24, 32, 39) and are connected to the tubes (18, 19, 20; 25, 33) in a bonded manger.

4. The heat exchanger according to claim 2, **characterized in that** the turbulence generator are in the form of structural elements (44, 45, 46, 47), in particular nubs or so-called winglets, formed out of the tubes (40).

5. The heat exchanger according to at least one of the claims 1 to 4, **characterized in that** the partial cross sections or the individual tubes (18, 19, 20; 26, 27, 28; 34, 35, 36; 41_{;} 42, 43) have a tube height h in a range of 4 to 15 mm, preferably 8 to 11 mm.

6. The heat exchanger according to once of the claims 1 to 5, **characterized in that** the partial cross sections or individual tubes (18, 19, 20; 26, 27, 28; 34, 35, 36; 41, 42, 43) have a tube width b and a ratio of tube width b to tube height h in the range of 2 to 10, in particular in the range of 3 to 7 sand particularly preferably in the range of 4 to 6.

7. The heat exchanger according to one of the claims 1 to 6, **characterized in that** it can be made of aluminium material.

8. The heat exchanger according to one of the claims 1 to 6, **characterized in that** it can be made of stainless steel.

## Revendications

1. Echangeur de chaleur, en particulier pour des véhiculés automobile, se composant à chaque fois de tubes (3) présentant une rection totale (3a), lesquels tubes sont traversés par un milieu à refroidir, où la section total (3a) peut être divisée en au moins deux sections partielles, où la section total (3a) est configurée en avant une forme à peu près rectangulaire, et les sections partielles (15a ; 18, 19, 20 ; 26, 27, 28 ; 34, 35, 36 ; 41, 42, 43) au moins au nombre de deux sont configurées en ayant une forme rectangulaire,
**caractérisé en ce que** chaque section partielle (15a) est configurée comme un tube individuel (15), et l'échangeur de chaleur présente au moins deux rangées de tubes (12, 13 ; 18, 19, 20).

2. Echangeur de chaleur selon La revendication 1, **caractérisé en ce que** des générateurs de turbulentes sont disposés dans chaque section partielle (18, 19, 20 ; 26, 27, 28 ; 34, 35, 36 ; 41, 42, 43).

3. Echangeur de chaleur selon la revendication 2, **caractérisé en ce que** les générateurs de turbulentes sont configures comme une nervure intérieure ou une nervure à âme pleine (24, 32, 39) et sont reliés aux tubes (18, 19, 20 ; 25, 33) par continuité de matière.

4. Echangeur de chaleur selon la revendication 2, **caractérisé en ce que** les générateurs de turbulences sont configurés comme des éléments de structuré (44, 45, 46, 47) formés en saillie sur les tubes (40), en particulier comme des tétons ou de petites ailettes verticales appelée *winglets*.

5. Echangeur de chaleur selon au moins l'une quelconque des revendications 1 à 4, **caractérisé en ce que** les sections partielles ou les tubes individuels (18, 19, 20 ; 26, 27, 28 ; 34, 35, 36 ; 41, 42, 43) présentant une hauteur tubulaire h dans une plage comprise entre 4 mm et 15 mm, de préférence entre 8 mm et 11 mm.

6. échangeur de chaleur selon l'une quelconque des revendications 1 à 5, **caractérisé en ce que** les section partielles ou les tubes individuels (18, 19, 20 ; 26, 27, 28 ; 34, 35, 36 ; 41, 42, 43) présentent une margeur tubulaire b et un rapport de la largeur tubulaire b, sur la hauteur tubulaire h, dans la plage comprisse entre 2 et 10, en particulier dans la plage comprisse entre 3 et 7, et, en particulier, de préférence dans la plage comprisse entre 4 et 6.

7. échangeur de chaleur selon l'une quelconque des revendications 1 à 6, **caractérisé en ce qu'**il peut être réalisé dans des matériaux à base d'aluminium.

8. Echangeur de chaleur selon l'une quelconque des revendications 1 à 6, **caractérisé en ce qu'**il peut être réalisé en acier spécial.
